# EUROPÄISCHE PATENTANMELDUNG

(11) **EP 1 233 263 A2**
(43) Veröffentlichungstag der Anmeldung: **21.08.2002**
(21) Anmeldenummer: 02010027.7
(22) Anmeldetag: 30.07.1997
(51) Int. Cl.: G01N 21/85, G01N 21/53, A47L 15/42, D06F 39/00

(54) **Sensor für ein Haushaltsgerät**

(30) Priorität: 06.08.1996 DE 19631703
(62) Teilanmeldung aus: 97113077.8
(71) Anmelder: AEG Hausgeräte GmbH, 90429 Nürnberg (DE); Esytec Energie- und Systemtechnik GmbH, 91054 Erlangen (DE)
(72) Erfinder: Leipertz, Alfred, Prof. Dr.-Ing., 91054 Erlangen (DE); Will, Stefan, Prof. Dr.-Ing., 90491 Nürnberg (DE)
(74) Vertreter: Höchtl, Walter, Dipl.-Ing.

(57) **Zusammenfassung**

Ein Sensor, vorzugsweise ein optischer Sensor, zur Messung der Trübung einer Wasch- oder Spülflüssigkeit in einem Haushaltsgerät ist so ausgebildet, dass er in den Heizstabflansch integriert ist und mit diesem dicht in das Medium einbringbar ist

## Beschreibung

Die Erfindung bezieht sich auf einen Sensor, vorzugsweise einen optischen Sensor, zur Detektion der Trübung einer Wasch- oder Spülflüssigkeit in einem Haushaltsgerät.

Die Bestandteile solcher Sensoren sollen weitgehend dicht gegen die Umgebung abgeschirmt sein und der Sensor soll gegenüber den Eigenschaften des umgebenden Mediums, wie z. B. der Temperatur, chemischer Aggressivität etc., weitgehend geschützt sein. Ein solches Medium stellt beispielsweise die Waschlauge in einer Waschmaschine oder die Spüllauge in einer Spülmaschine dar.

In den genannten Geräten werden optische Sensoren zur Trübungsbestimmung der Wasch- bzw. Spüllauge verwendet. Aus den detektierten Signalen, d. h. aus der gemessenen Trübung der Lauge können Rückschlüsse für den weiteren Wasch- bzw. Spülvorgang, insbesondere über die Notwendigkeit der Zufuhr von Frischwasser, den Reinheitsgrad der Wäsche bzw. des Geschirrs etc., gezogen werden.

Die Trübungsbestimmung einer Waschlauge durch einen optischen Sensor erfolgt in der Regel in Durchlicht- bzw. Extinktionsmessung. Mit dem nachfolgend beschriebenen optischen Sensor ist aber auch eine Streulichtmessung möglich. Bei der Durchlicht- bzw. Extinktionsmessung wird das von einem Sender emittierte und durch die Waschlauge gedämpfte Licht von einem Empfänger detektiert. Zur Dämpfung des transmittierten Lichtes tragen vornehmlich Streu- und Absorbtionsprozesse der in der Waschlauge gelösten bzw. dispergierten Substanzen bei. Für den Einsatz von Sendereinheiten im nahen infraroten Bereich zeigt sich, daß Einfärbungen der Lauge in der Regel gegen die Trübung durch das Waschmittel zu vernachlässigen sind.

Aufgabe der Erfindung ist es einen Sensor, vorzugsweise einen optischen Sensor zu schaffen, der gegen äußere Einflüsse weitgehend geschützt ist.

Diese Aufgabe wird mit einem Sensor, vorzugsweise einem optischen Sensor, zur Messung der Trübung einer Wasch- oder Spülflüssigkeit in einem Haushaltsgerät gelöst, wobei der Sensor in den Heizstabflansch integriert ist oder über den Heizstabflansch eingebracht ist.

Nach einer vorteilhaften Ausbildung der Erfindung besteht ein optischer Sensor aus einem Sende- und Empfangsteil, wobei mindestens der Sende- oder Empfangsteil ein Mittel zur Lichtemission bzw. Detektion aufweist, das in einen Hohlraum eingebracht ist, der mit einem optisch durchlässigen Gegenstand abgeschlossen ist.

Um den Strahlungsfluß bzw. die Bestrahlungsstärke und damit das detektierte Signal zu erhöhen, kann dabei der Sendeteil mit einem kollimierenden und/oder der Empfangsteil mit einem fokussierenden Gegenstand abgeschlossen sein.

Nach einer vorteilhaften Ausbildung der Erfindung ist der kollimierende bzw. fokussierende Gegenstand kugelförmig ausgebildet. Ein kugelförmiger optischer Gegenstand stellt die ökonomischste und einfachste Form einer kollimierenden bzw. fokussierenden Linse dar. Er läßt sich außerdem montagetechnisch einfach und dicht gegenüber einem zu detektierenden Medium abschließen.

Eine weitere vorteilhafte Ausbildung der Erfindung ist dadurch gegeben, daß der Hohlraum durch ein Rohr gebildet ist. Mittels eines dünnen Rohres lassen sich die Mittel zur Lichtemission bzw. -detektion besonders gut aufnehmen und abschirmen und durch entsprechende Rohrverlegung an die gewünschte Meßstelle bringen.

Als Mittel zur Lichtemission ist ein Lichtwellenleiter besonders geeignet, insbesondere läßt sich ein Lichtwellenleiter einfach in ein dünnes Rohr einbringen.

Ein optimaler Wirkungsgrad des Sensors läßt sich dann erreichen, wenn der Lichtwellenleiter beabstandet zum kugelförmigen Gegenstand angeordnet ist.

Die Mittel zur Lichtemission bzw. -detektion müssen nicht zwangsläufig einen Lichtwellenleiter aufweisen, sondern könnten direkt eine Leuchtdiode beinhalten, die vor dem kollimierenden optischen Gegenstand, beispielsweise einer Glaskugel, angeordnet sind. Dabei müßten dann die elektrischen Anschlüße dieser Fotodiode durch den Hohlraum, beispielsweise durch das Rohr, nach außen geführt werden. Dies ist aber insofern nachteilig als die Fotodioden sich im vom Medium umspülten bzw. umgebenen Hohlraum befinden und somit Temperaturschwankungen oder anderen Einflüssen mehr ausgesetzt sind, als wenn sie sich außerhalb des zu vermessenden Mediums befänden.

Dieser Nachteil wird nach einer besonders vorteilhaften Ausbildung dadurch Vermieden, daß der Hohlraum des Sende- und Empfangsteils so mit einem Flansch verbunden ist, daß Sende- und Empfangsteil anschlußseitig zugänglich sind und der Sensor mittels des Flansches dicht in ein zu detektierendes Medium einbringbar ist. Bei dieser Ausführungsform können dann die Leuchtdioden oder allgemein die Mittel, die die optischen Signale in elektrische umwandeln und umgekehrt, außerhalb des Raumes in dem sich das zu detektierende Medium befindet, angeordnet werden und sind damit absolut getrennt von Einflüssen die durch das Medium hervorgerufen werden. Für ein Haushaltsgerät wie einen Waschautomaten oder einen Geschirrspülautomaten bedeutet dies, daß sich die Wandlereinheiten außerhalb des Bottichs, beispielsweise in den übrigen Steuereinheiten des Gerätes integrieren lassen. Die Zuleitung kann mittels der Lichtwellenleiter über einen Anschluß in den Bottich eingebracht werden. Die Lichtwellenleiter können außerhalb des Bottichs bereits in einem Rohr oder auch frei verlegt werden.

Als Anschluß kann dabei ein gesonderter Anschluß für den Sensor beispielsweise über eine Schraubverbindung oder eine andere mediumdichte Verbindung vorgesehen werden. Besonders vorteilhaft lassen sich die Mittel zur Lichtemission bzw. -detektion mittels eines Rohres über den Flansch eines Heizstabes eines Wasch- oder Geschirrspülautomaten in den Bottich einbringen, so daß lediglich der Flansch des Heizstabes entsprechend ausgebildet sein muß, jedoch keine besondere zusätzliche Öffnung im Bottich vorgesehen werden muß.

Als besonders vorteilhaft zur Messung des Zustands eines Mediums erweist sich eine Sensoranordnung mit mindestens zwei optischen Sensoren. Diese beiden Sensoren können aus einem Sende- und zwei Empfangsteilen oder einem Empfangs- und zwei Sendeteilen oder jeweils aus einem Sende- und Empfangsteil gebildet werden. Alle diese Variationen ermöglichen beispielsweise die Bildung von unterschiedlich langen Meßstrecken.

Wenn die Sensoranordnung so ausgebildet ist, daß mindestens zwei Sensoren unterschiedlich lange Meßstrecken aufweisen, lassen sich Alterungs-, Verschmutzungs-, restliche Temperatur- und mögliche sonstige, die Leistung des Sensors beeinträchtigende Einflüsse in der Sensoranordnung kompensieren. Außerdem können zwei Sensoren so miteinander verbunden werden, daß sie sich gegenseitig mechanisch stabilisieren.

Werden die Sensoren mit unterschiedlichen Wellenlängen betrieben, von denen mindestens eine im sichtbaren Spektralbereich liegt, so lassen sich damit auch unterschiedliche Färbungen des Mediums detektieren.

Nach einer weiteren vorteilhaften Ausbildung der Erfindung kann ein Sendeteil verwendet werden, das mit unterschiedlichen Wellenlängen betrieben werden kann. Damit lassen sich mit nur einem Sensor die Färbungen des Mediums detektieren.

Wie bereits erwähnt, ist die Integration des optischen Sensors in einen Heizstab eines Haushaltsgerätes besonders vorteilhaft. Dies trifft aber nicht nur auf den durch die bisherigen Merkmale definierten Sensor, sondern ganz allgemein auf einen Sensor zur Trübungsmessung, unabhängig von seinem jeweiligen Aufbau, zu.

Ein Ausführungsbeispiel der Erfindung wird nachfolgend anhand der Zeichnung beschrieben.

Dabei zeigen:
- Fig. 1: ein Mittel zur Lichtemission S,
- Fig. 2: eine optische Meßstrecke bestehend aus einem Mittel zur Lichtemission S und einem Mittel zur Lichtdetektion E,
- Fig. 3: einen optischen Sensor, der in einem Heizstab integriert ist, und
- Fig. 4: einen optischen Sensor mit zwei Meßstrecken

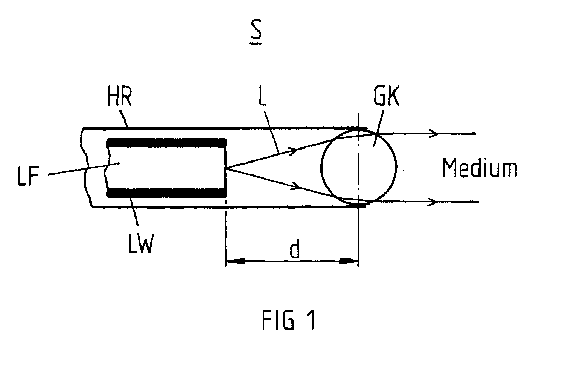

Fig. 1 zeigt ein Mittel zur Lichtemission, das in einem Hohlraum HR, der beispielsweise durch ein Rohr gebildet sein kann, eingebracht ist. Als Mittel zur Lichtemission dient ein - teilweise dargestellter - Lichtwellenleiter LW. Das Ende des Lichtwellenleiters LW ist im Abstand d zu einem kollimierenden bzw. fokussierenden optischen Gegenstand angeordnet. Dieser Gegenstand ist im Ausführungsbeispiel eine Glaskugel GK.

Das Lichtbündel L verläßt die Lichtleitfaser LF unter einem Öffnungswinkel phi, wird durch die Glaskugel GK kollimiert und trifft als paralleles Lichtbündel auf das zu detektierende Medium. Der Durchmesser und die Lage der Glaskugel GK ist auf die numerische Apertur des Lichtwellenleiters abzustimmen. Die Mittel bzw. Berechnungsmethoden dafür sind dem Fachmann hinlänglich bekannt. Der Abstand zwischen der Glaskugel GK oder genauer zwischen objektseitiger Hauptebene der Kugeloptik und der Faser LF soll dabei der objektseitigen Brennweite der Kugeloptik entsprechen. Die numerische Apertur der Faser ist so zu wählen, daß bei diesem Abstand die Kugel möglichst vollständig ausgeleuchtet ist.

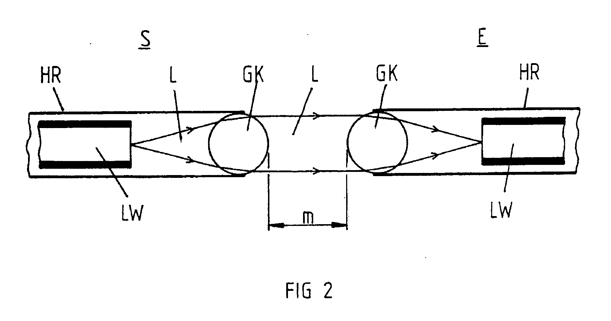

Fig. 2 zeigt einen Teil einer optischen Sensoranordnung mit jeweils einem Mittel zur Lichtemission als Sender S und einem Mittel zur Lichtdetektion als Empfänger E. Dabei ist der Empfänger E konstruktiv in gleicher Weise aufgebaut wie der Sender S. Die Glaskugel GK dient beim Empfänger E zur Fokussierung des parallel auftreffenden Lichtbündels L. Dieser konstruktiv gleiche Aufbau des Empfängers bzw. des Senders ist jedoch nicht zwingend, der Hohlraum HR des Empfängers bzw. des Senders könnte beispielsweise auch ein Rechteck sein oder das Mittel zur Lichtdetektion bzw. das Mittel zur Lichtemission könnte in ein bereits vorhandenes Gehäuse eines Waschbottichs oder eines Spülbehälters integriert werden; der Lichtwellenleiter LW könnte durch ein anderes Mittel, beispielsweise durch eine Leuchtdiode etc., ersetzt werden. Die Meßstrecke befindet sich zwischen den beiden Glaskugeln GK des Senders und Empfängers.

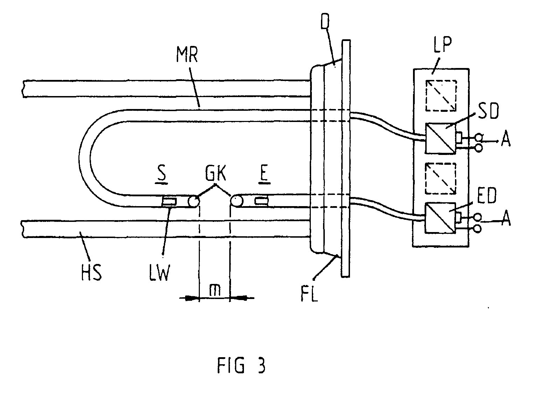

Fig. 3 zeigt einen optischen Sensor mit einem Sende- und Empfangsteil S, E, der in einen Heizstab eines Hausgeräts, beispielsweise einer Waschmaschine oder einer Geschirrspülmaschine, eingesetzt werden kann. Der Heizstab besteht aus einem Flansch FL, der eine Dichtung D für den wasser- bzw. laugendichten Abschluß des Bottichs oder Spülbehälter aufweist. Über den Flansch werden die - hier nur teilweise gezeigten - Heizstäbe HS in den Bottich eingebracht.

Zur Einbringung des Senders S und des Empfängers E des optischen Sensors ist der Flansch FL zur Aufnahme eines Metallrohres MR ausgebildet. Die Lichtwellenleiter LW können somit von außen in das bzw. die Metallrohre des Senders S und des Empfängers E eingebracht werden. Das Metallrohr MR des Senders S und des Empfängers E sind jeweils mit Glaskugeln GK abgeschlossen. Zwischen den Glaskugeln GK Befindet sich die Meßstrecke m. Von der Außenseite, d. h. von der dem Heizstab und dem Sensor abgewandten Seite des Flansches FL, werden die Lichtwellenleiter LW zu einer Leiterplatte LP geführt und dort an die Wandlereinheiten, d. h. an eine Senderdiode SD und eine Empfängerdiode ED, angeschlossen.

Die Senderdiode SD und die Empfängerdiode ED weisen eingangs- bzw. ausgangsseitig elektrische Anschlüße A auf. Auf der Leiterplatte sind - gestrichelt dargestellt - weitere Sender- und Empfangsdioden vorgesehen, da zur Detektion der Trübung der Wasch- bzw. Spüllauge auch eine Sensoranordnung mit mehreren optischen Sensoren verwendet werden kann.

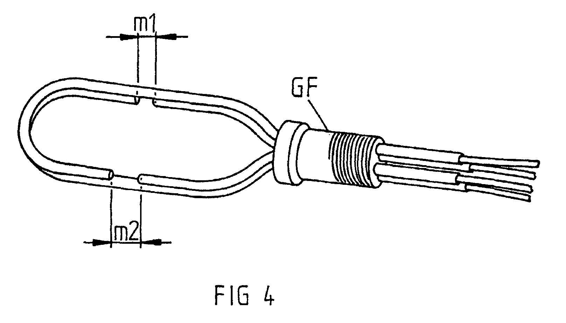

Eine Sensoranordnung mit zwei optischen Sensoren ist in Fig. 4 dargestellt. Im Gegensatz zur Darstellung gemäß Fig. 3 sind in Fig. 4 die Sende- und Empfangsmittel nicht über den Heizstabflansch sondern über einen gesonderten Gewindeflansch GF angeschlossen. Wie deutlich zu sehen ist, ist die Meßstrecke m1 kürzer als die Meßstrecke m2. Durch die unterschiedlichen Längen der Meßstrecken lassen sich beispielsweise Alterungsprozesse der Sensoren kompensieren. Die Anordnung mit den zwei Meßstrecken m1, m2 hat gleichzeitig den Vorteil, daß die Röhrchen, in denen die Sende- und Empfangseinheiten untergebracht sind, miteinander beispielsweise durch Klebung oder durch Löten verbunden werden können, so daß sie sich gegenseitig stabilisieren und die Meßstrecken m1, m2 axial aufeinander ausgerichtet bleiben.

Die Anwendung des Sensors zur Erfassung von optischen Signalen ist dabei nicht auf den Bereich der Haushaltsgeräte beschränkt. Vielmehr wird auch in anderen Bereichen der Verfahrenstechnik ein optischer Sensor benötigt, der weitgehend gegenüber den Eigenschaften des umgebenden Mediums geschützt ist. Dies gilt beispielsweise für den Einsatz in Rohrleitungen, Kesseln, etc. in der chemischen Industrie, der Umwelttechnik oder der Wasseraufbereitung.

Ein Sensor oder eine Sensoranordnung kann dabei beispielsweise so in ein Rohr eingeschraubt oder auf sonstige Weise mittels eines Flansches in ein Behältnis dicht eingebracht werden, daß Sende- und Empfangsteile anschlußseitig zugänglich sind. Hierbei können bereits vorhande Durchführungen für andere Sensoren genutzt werden.

Ein Sensor oder eine Sensoranordnung kann dabei auf unterschiedlichste Weise genutzt werden. Beispielsweise läßt sich der Sensor zur Trübungsmessung und daraus abgeleitet zur Bestimmung der Konzentration einer dispergierten oder gelösten Substanz einsetzen. Durch die Verwendung eines Sensors oder einer Sensorkombination mit Lichtemission in unterschiedlichen Spektralbändern kann die Farbe eines Mediums bestimmt werden.

Neben der Anwendung des Sensors in wäßrigen Medien ist ein Einsatz auch in anderen Fluidzuständen, beispielsweise in der Gasphase möglich. So kann der Sensor günstig in Reaktionskammern oder in allen anderen Anwendungsbereichen eingesetzt werden, bei denen z.B. aufgrund der Temperatur eine direkte Messung mit anderen optischen Anordnungen nicht möglich ist.

Über eine geeignete Auswahl von Sender- und Empfängereinheit sind zum Beispiel auch die Konzentrationen flüssiger oder gasförmiger Komponenten absolut oder relativ bestimmbar, wobei das Sensorsignal auch zur Regelung eines verfahrens- oder reaktionstechnischen Prozesses verwendet werden kann.

Generell gilt für alle Anwendungsfälle, daß je nach den Eigenschaften des zu untersuchenden Mediums ein mediendichter Abschluß nicht zwingend gefordert ist, vielmehr kann beispielsweise eine teilweise Diffusion des Mediums in den Sensor geduldet werden, solange keine wesentliche thermische oder chemische Beschädigung der im Sensor integrierten Komponenten erfolgt und ein Signal noch ausreichend genau detektiert werden kann.

## Patentansprüche

1. Sensor, vorzugsweise ein optischer Sensor, zur Messung der Trübung einer Wasch- oder Spülflüssigkeit in einem Haushaltsgerät, wobei der Sensor in den Heizstabflansch integriert ist oder über den Heizstabflansch eingebracht ist.

2. Sensor nach Anspruch 1 mit einem Sendeteil (S) und einem Empfangsteil (E), wobei der Sendeteil (S) ein Mittel zur Lichtemission (LW) und der Empfangsteil ein Mittel zur Lichtdetektion (LW) aufweist, von denen ein oder beide Mittel in einen jeweils eigenen Hohlraum eingebracht ist bzw. sind und wobei der Hohlraum mit einem optischen Gegenstand (GK) abgeschlossen ist.

3. Sensor nach einem der vorstehenden Ansprüche, wobei der Hohlraum, in dem sich das lichtemittierende Mittel (LW) befindet, mit einem kollimierenden und/oder der Hohlraum, in dem sich das lichtdetektierende Mittel befindet, mit einem fokussierenden optischen Gegenstand abgeschlossen ist.

4. Sensor nach Anspruch 3, wobei der kollimierende bzw. fokussierende Gegenstand kugelförmig ist.

5. Sensor nach einem der vorstehenden Ansprüche, wobei der Hohlraum (HR) durch ein Rohr gebildet ist.

6. Sensor nach einem der vorstehenden Ansprüche, wobei das Mittel zur Lichtemission bzw. Lichtdetektion ein Lichtwellenleiter (LW) ist.

7. Sensor nach Anspruch 6, wobei der Lichtwellenleiter (LW) im Abstand (d) zum kugelförmigen Gegenstand angeordnet ist.

8. Sensor nach einem der vorstehenden Ansprüche, wobei der jeweilige Hohlraum (HR) des Sende- und Empfangsteils so mit dem Heizstabflansch (FL) eines Wasch- oder Geschirrspülautomaten verbunden ist, dass Sende-(S) und Empfangsteil (E) anschlussseitig von außen zugänglich sind und der Sensor mittels des Flansches (FL) dicht in ein zu detektierendes Medium einbringbar ist.

9. Sensoranordnung nach einem der vorstehenden Ansprüche mit mindestens zwei optischen Sensoren.

10. Sensoranordnung nach Anspruch 9, wobei die Sensoren unterschiedlich lange Messstrecken aufweisen.

11. Sensoranordnung nach Anspruch 9 oder 10, wobei mindestens zwei Sensoren mit unterschiedlicher Wellenlänge betrieben werden.

12. Sensoranordnung nach einem der vorstehenden Ansprüche wobei mindestens ein Sendeteil mit unterschiedlichen Wellenlängen betrieben wird.

13. Sensoranordnung nach einem der vorstehenden Ansprüche, wobei die Sende- (S) und die Empfangseinheit (E) mechanisch starr miteinander verbunden sind.

14. Sensoranordnung nach Anspruch 13, wobei die mechanisch starre Verbindung durch den Hohlraum (HR) mindestens einer weiteren Sende- (S) und/oder Empfangseinheit (E) gebildet ist.
